# EUROPÄISCHE PATENTSCHRIFT

(11) **EP 0 784 179 B1**
(45) Veröffentlichungstag und Bekanntmachung des Hinweises auf die Patenterteilung: **21.03.2001**
(21) Anmeldenummer: 96118825.7
(22) Anmeldetag: 25.11.1996
(51) Int. Cl.: F16L 7/00

(54) **Distanzhalter für durch Schutzrohre hindurchzuführende Medienrohre**
Spacing element for fluid carrying conduits leading through protective piping
Dispositif d'écartement pour conduits pour le transport de fluides à travers un conduit de protection

(30) Priorität: 11.01.1996 DE 29600375 U
(43) Veröffentlichungstag der Anmeldung: 16.07.1997
(73) Patentinhaber: DSI ROHRLEITUNGSBAU-ZUBEHÖR GmbH, D-72147 Nehren (DE)
(72) Erfinder: Lutz, Uli, 73061 Ebersbach (DE); Skerra, Bernd, 72116 Mössingen (DE)
(74) Vertreter: Dreiss, Fuhlendorf, Steimle & Becker, Patentanwälte

(56) Entgegenhaltungen:
- DE-U- 9 114 077
- DE-U- 9 205 990
- DE-U- 9 307 170
- DE-U- 9 319 592
- PATENT ABSTRACTS OF JAPAN vol. 015, no. 279 (M-1136), 16.Juli 1991 & JP 03 096595 A (KUBOTA CORP), 22.April 1991,

## Beschreibung

Die vorliegende Erfindung bezieht sich auf einen Distanzhalter für durch Schutzrohre hindurchzuführende Medienrohre nach dem Oberbegriff des Anspruchs 1.

Bekannte Distanzhalter dieser Art sind je nach Außendurchmesser des Medienrohres aus zwei oder mehr Ringsegmenten zusammengesetzt, die an ihren Flanschen mittels mehrerer Metallschrauben miteinander verbunden werden. Die die Verbindungsorgane bildenden metallischen Schraubbolzen ergeben eine den Kathodenschutz störende elektrische Verbindungsbrücke zwischen Medienrohr und Schutzrohr, was in vielen Fällen vermieden werden muß. Schraubbolzen aus Kunststoff dagegen sind den aufzuwendenden Verbindungszugkräften nicht gewachsen. Andererseits sind insbesondere dort, wo eine Vielzahl von Ringsegmenten kettenartig den Distanzhalter bilden, für den Kathodenschutz Keilschieber aus Kunststoff oder eine Klammer (DE-U-92 05 990) beidendig über hinterschnittene Flansche in axialer Richtung gebracht. Sowohl die Verbindungsorgane in Form von metallischen Schraubbolzen als auch die Verbindungsorgane in Form von Kunststoff-Keilschiebern bzw. -Klammern sind insoweit nachteilig, als ihre Anbringung zeitraubend ist, zumal an jeder Ringsegmentverbindungsstelle zwei oder mehr Verbindungsschrauben bzw. zwei Keilschieber bzw. eine Klammer vorgesehen werden müssen. Insbesondere auch bei feuchter und kalter Witterung sind solche Verbindungsorgane umständlich zu handhaben.

Aufgabe der vorliegenden Erfindung ist es deshalb, einen Distanzhalter für durch Schutzrohre hindurchzuführende Medienrohre der eingangs genannten Art zu schaffen, der eine wesentliche schnellere und einfacher zu handhabende nicht metallische Verbindung des oder der Ringsegmente des Ringkörpers ermöglicht.

Zur Lösung dieser Aufgabe sind bei einem Distanzhalter für durch Schutzrohre hindurchzuführende Medienrohre der genannten Art die im Anspruch 1 angegebenen Merkmale vorgesehen.

Durch die erfindungsgemäßen Maßnahmen ist ein Verbindungsorgan erreicht, das gegenüber den bisher verwendeten Schraubbolzen bzw. Keilschiebern bzw. Klammern erheblich kostengünstiger in der Herstellung ist. Das als einstückig umlaufender elastischer Spannring ausgebildete Verbindungsorgan läßt sich auch bei ungünstigen Witterungsbedingungen in schneller und einfacher Weise handhaben. Während bei einer Keilschieberverbindung ein erheblicher Kraftaufwand erforderlich ist und bei einer Schraubverbindung die beiden Einzelteile mit einer gewissen Fingerfertigkeit und in zeitraubender Weise miteinander verbunden werden müssen, wobei gegebenenfalls eines der Schraubelemente bzw. der Keilschieber verloren gehen kann, benötigt der einstückige elastische Spannring lediglich einen Vorspannvorgang von Hand, um den Spannring über die zusammenzuhaltenden Flansche bzw. Flanschelemente zu bringen, so daß der Verbindungsvorgang sowohl von der Handhabung als auch vom Zeitaufwand her erheblich vereinfacht ist. Ein weiterer Vorteil liegt darin, daß die für unterschiedliche Medienrohr-Außendurchmesser vorgegebenen Ringsegmente der Ringkörper an ihren einander zugewandten Flanschen bzw. Flanschelementen gegebenenfalls auch mehr klaffen können als dies bei einer Schraubverbindung oder gar bei einer Keilschieberverbindung der Fall sein kann, bei der eine möglichst gute axiale Ausrichtung der fluchtenden Bohrungspaare bzw. der Flanschpaare vorhanden sein muß.

Eine vorteilhafte Ausgestaltung des elastischen Spannringes ergibt sich dann, wenn die Merkmale gemäß Anspruch 2 vorgesehen sind. Entsprechend der Größe des Flansches bzw. der Flanschelemente können gegebenenfalls handelsüblich erhältliche O-Ringe verwendet werden. Das Anordnen des oder der elastischen Spannringe an den aneinanderliegenden Flanschen bzw. Flanschelementen kann gemäß den Merkmalen eines oder mehrere der Ansprüche 3 bis 8 vorgenommen werden.

Sind relativ hohe Haltekräfte durch den elastischen Spannring aufzubringen, so kann es zweckmäßig sein, entsprechend den Merkmalen des Anspruchs 9 mehrere elastische Spannringe über- und/oder nebeneinander vorzusehen.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in schematischer perspektivischer Darstellung einen um ein Medienrohr gespannten aus zwei Ringsegmenten aufgebauten Distanzhalter gemäß einem ersten Ausführungsbeispiel vorliegender Erfindung,
- Figur 2: eine Draufsicht auf den Distanzhalter nach Figur 1,
- Figur 3: in schematischer perspektivischer und abgebrochener Darstellung einen aus mehreren Ringsegmenten aufgebauten Distanzhalter gemäß einem zweiten Ausführungsbeispiel vorliegender Erfindung und
- Figur 4: teilweise in Ansicht und teilweise im Schnitt ein Ringsegment des Distanzhalters nach Figur 3.

Gemäß den in der Zeichnung dargestellten Ausführungsbeispielen vorliegender Erfindung ist ein Medienrohr 10 bzw. 60, das durch ein nicht dargestelltes Schutzrohr hindurch verlegt werden soll, in Abständen mit jeweils einem Distanzhalter 11 bzw. 61 außenumfangsseitig belegt. Die verschiebefest aufgeklemmten Distanzhalter 11 bzw. 61 dienen beim Einbringen des Medienrohres 10 bzw. 60 in ein Schutzrohr einerseits zur Abstandshalterung zwischen dem inneren Medienrohr 10 bzw. 60 und dem äußeren Schutzrohr und zum anderen als Gleitkörper zur Reduzierung der Reibung beim Einschieben. Hierzu ist der Distanzhalter 11 bzw. 61 beispielsweise aus gut gleitfähigem Kunststoff hergestellt.

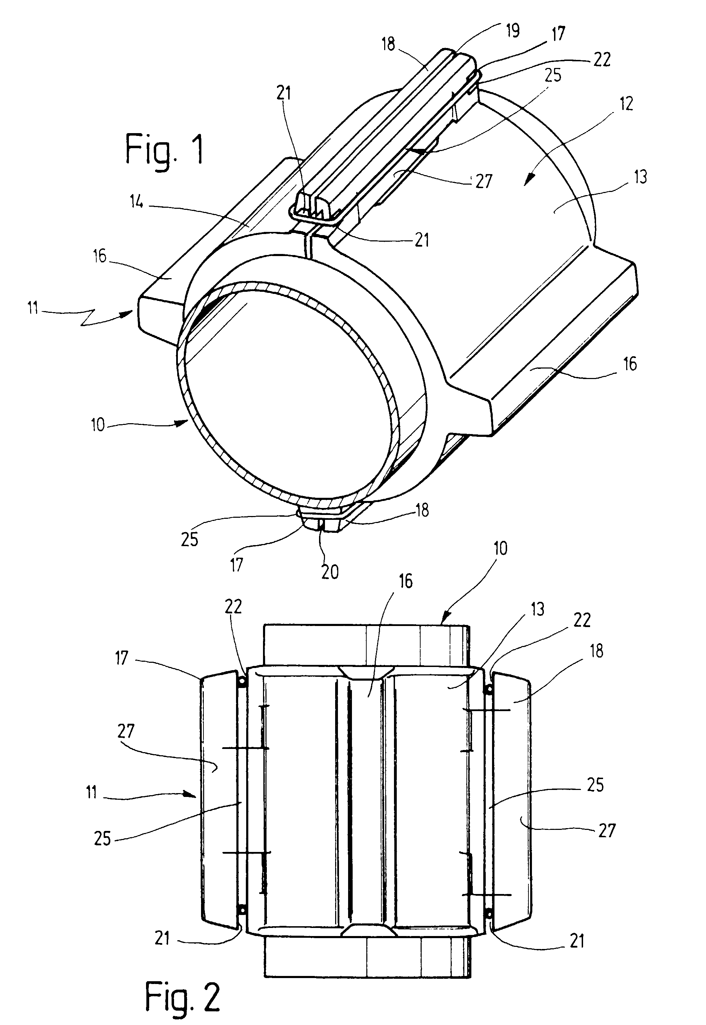

Beim in den Figuren 1 und 2 dargestellten Ausführungsbeispiel besitzt der Ringkörper 12 zwei identisch ausgebildete Ringsegmente 13 und 14, wobei es sich versteht, daß der Ringkörper auch aus mehr als zwei Ringsegmenten je nach Außendurchmesser des Medienrohres 10 bestehen kann. Jedes Ringsegment 13, 14 besitzt umfangsseitig einen in axialer Richtung des Ringkörpers 12 verlaufenden als Gleitkufe dienenden Vorsprung 16 und an seinen Enden radial vorstehende Flansche 17 und 18. Es versteht sich, daß das Ringsegment 13, 14 auch mit mehr als einer Gleitkufe 16 versehen sein kann. Bei diesem Ausführungsbeispiel ist die radiale Höhe der Flansche 17, 18 gleich der radialen Höhe des Vorsprungs 16, so daß jeweils zwei einander zugewandte Flansche 17, 18 zweier nebeneinanderliegender Ringsegmente 13, 14 ebenfalls eine Gleitkufe bilden.

Die Ringsegmente 13 und 14 sind derart ausgebildet, d.h. ihre Innenumfangslängen sind derart auf den Außenumfang des Medienrohres 10 abgestimmt, daß bei auf den Außenumfang des Medienrohres 10 aufgebrachter Anordnung die einander zugewandten Flansche 17 und 18 der Ringsegmente 13, 14 zwischen sich einen Spalt 19 bzw. 20 bilden. Dies ermöglicht den Ausgleich von Toleranzen und das Festklemmen der Ringsegmente 13 und 14 auf den Außenumfang des Medienrohres 10 mit Hilfe von die Ringsegmente 13, 14 miteinander verbindenden Verbindungsorganen 25. In den Figuren 1 und 2 sind die Ringsegmente 13, 14 identisch ausgebildet; es versteht sich, daß an einem Medienrohr 10 auch Ringsegmente verwendet werden können, die unterschiedlich lang sind, d.h. unterschiedlich große Kreisbogen überspannen.

Die Flansche 17 und 18 sind gemäß den Figuren 1 und 2 jeweils end- bzw. stirnseitig mit einer Nut 21 bzw. 22 versehen, die vorzugsweis tangential zum Innenumfang des Ringsegmentes 13, 14 verläuft. Die Nuten 21 und 22 der Flansche 17, 18 benachbarter Ringsegmente 13 und 14 sind in auf dem Medienrohr 10 aufgebrachtem Zustand in einer Flucht. Über die einander zugewandten Flansche 17 und 18 benachbarter Ringsegmente 13, 14 wird ein Verbindungsorgan in Form eines einstückigen elastischen Spannringes 25 gebracht und in die Nuten 21 und 22 eingelegt. Der elastische Spannring 25 ist in dieser die Flansche 17, 18 verbindenden Lage vorgespannt und hält durch diese Vorspannung die Ringsegmente 13 und 14 auf dem Medienrohr 10 zusammen. Auf der außenseitigen Längsfläche 27 der Flansche 17, 18 liegt der Spannring 25 ungeführt auf. Es versteht sich, daß es auch möglich ist, diese Außenfläche 27 mit einer Nut zu versehen.

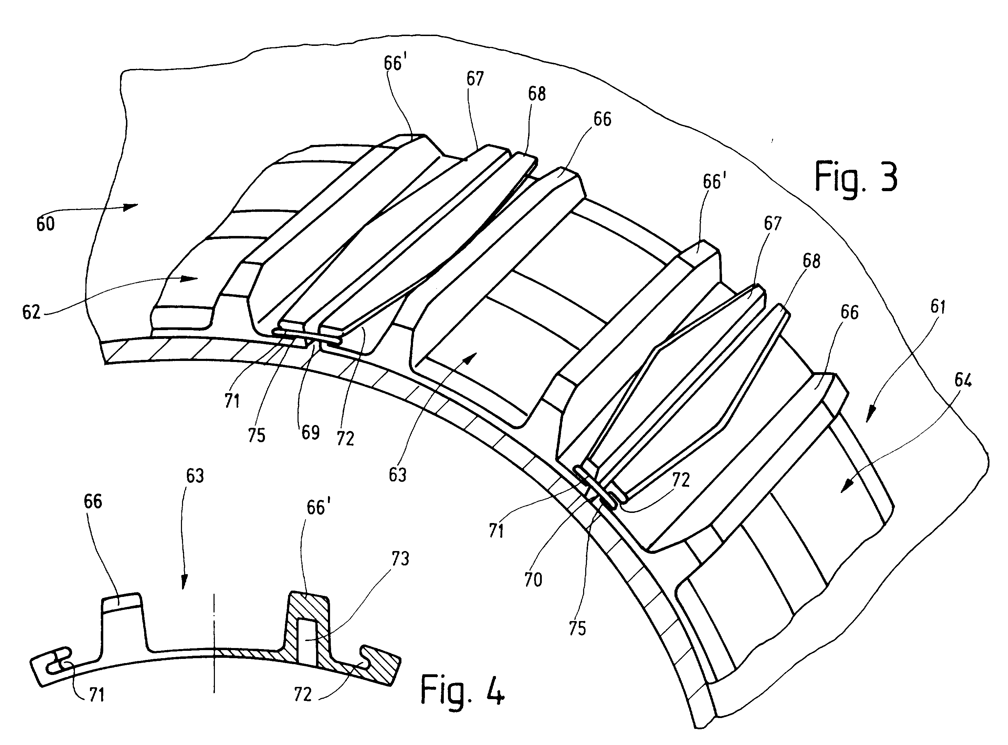

Bei dem in den Figuren 3 und 4 dargestellten Ausführungsbeispiel vorliegender Erfindung besitzt der Ringkörper 62 des Distanzhalters 61 mehrere identisch ausgebildete oder kürzere und längere Ringsegmente 63, 64, 65 rund um den Umfang des Medienrohrs 60. Jedes Ringsegment 63 bis 65 ist nahe seinen beiden Flanschen 67 und 68 mit jeweils einem in axialer Richtung des Ringkörpers 62 verlaufenden als Gleitkufe dienenden Vorsprung 66, 66' versehen. Die Gleitkufen 66, 66' besitzen gemäß Figur 4 einen längsverlaufenden Hohlraum 73. Bei diesem Ausführungsbeispiel dienen die Flansche 67, 68 nicht gleichzeitig als Gleitkufen. Die Flansche 67, 68 sind mit Hinterschneidungen 71, 72 in Längsrichtung, d.h. in der Breite der Ringsegmente 63 bis 65 versehen.

Auch bei diesem Ausführungsbeispiel sind die Ringsegmente 63 bis 65 derart auf den Außenumfang des Medienrohres 60 abgestimmt, daß die einander zugewandten Flansche 67, 68 der Ringsegmente 63 bis 65 zwischen sich einen Spalt 69, 70 zum Ausgleich von Toleranzen und zum Festklemmen der Ringsegmente auf dem Medienrohr bilden. Wenn auch die Ringsegmente 63 bis 65 identisch ausgebildet sind, versteht es sich, daß das eine oder andere dieser Ringsegmente durch ein einen kleineren Kreisbogen überspannendes Ringsegment mit identischer Flanschausgestaltung jedoch nur einer einzigen Gleitkufe mittig zwischen diesen Flanschen ersetzt sein kann.

Auch bei diesem Ausführungsbeispiel ist das Verbindungsorgan, das die Flansche 67, 68 benachbarter Ringsegmente 63 bis 65 zusammenhält, in Form eines einstückig umlaufenden elastischen Spannringes 75 ausgebildet. Der elastische Spannring 75 wird in vorgespanntem Zustand über die Flansche 17, 18 benachbarter Ringsegmente 63 bis 65 gebracht und in die längsverlaufenden Hinterschneidungen 71, 72 der Flansche 67, 68 eingelegt. Stirnseitige Nuten sind hier nicht vorhanden.

Bei den dargestellten Ausführungsbeispielen sind die elastischen Spannringe 25 bzw. 75 aus einem Elastomer hergestellt und besitzen die Form eines sogenannten O-Ringes.

Bei einem weiteren nicht dargestellten Ausführungsbeispiel vorliegender Erfindung sind die Flansche als über die Breite der Ringkörper bzw. Ringsegmente gleichvermäßig verteilt angeordnete hakenförmige Flanschelemente ausgebildet. Die elastischen Spannringe 25, 75 sind dabei entweder über jeweils ein Paar einander gegenüberliegender hakenförmiger Flanschelemente benachbarter Ringsegmente oder insgesamt über sämtliche hakenförmige Flanschelemente benachbarter Ringsegmente gelegt.
Ist ein erhöhter Kraftbedarf zum Spannen bzw. Zusammenhalten der Ringsegmente des Ringkörpers bei einem oder mehreren der vorstehend genannten Ausführungsbeispielen angebracht bzw. vorgegeben, können mehrere elastische Spannringe über- und/oder nebeneinander vorgesehen sein.

## Patentansprüche

1. Distanzhalter (11, 61) für durch Schutzrohre hindurchzuführende Medienrohre (10, 60), mit einem Ringkörper (12, 62) aus mehreren mit radial vorstehenden und axial ausgerichteten Gleitkufen (16, 17, 66, 67) versehenen und aus Kunststoff gefertigten Ringsegmenten (13, 14, 63, 64, 65), wobei die Ringsegmente an ihren einander zugewandten Enden radial abstehende Flansche (17, 18, 67, 68) oder Flanschelemente zur Aufnahme von Verbindungsorganen (25, 75) aufweisen, **dadurch gekennzeichnet,** daß das Verbindungsorgan durch einen einstückig umlaufenden elastischen Spannring (25, 75) gebildet ist.

2. Distanzhalter nach Anspruch 1, dadurch gekennzeichnet, daß der elastische Spannring (25, 75) ein O-Ring ist.

3. Distanzhalter nach Anspruch 1 oder 2, dadurch gekennzeichnet, daß die aneinanderliegenden Flansche (17, 18, 67, 68) von einem elastischen Spannring (25, 75) umgeben sind.

4. Distanzhalter nach Anspruch 3, dadurch gekennzeichnet, daß der elastische Spannring (25, 75) in stirnseitigen Nuten (21, 22) der Flansche (17, 18) aufgenommen sind.

5. Distanzhalter nach Anspruch 3 oder 4, dadurch gekennzeichnet, daß der elastische Spannring (25, 75) in längsseitige Hinterschneidungen (71, 72) der Flansche (67, 68) eingreift.

6. Distanzhalter nach Anspruch 1 oder 2, dadurch gekennzeichnet, daß an einem Ringsegment (13, 15, 63 bis 65) zwei oder mehr hakenartige Flanschelemente vorgesehen sind, die von Spannringen (25, 75) umgeben sind.

7. Distanzhalter nach Anspruch 6, dadurch gekennzeichnet, daß die einander gegenüberliegenden hakenartigen Flanschelemente benachbarter Ringsegmente (13, 14, 63 bis 65) paarweise von einem elastischen Spannring (25, 75) umgeben sind.

8. Distanzhalter nach Anspruch 6, dadurch gekennzeichnet, daß alle hakenartigen Flanschelemente benachbarter Ringsegmente (13, 14, 63 bis 65) gemeinsam von einem elastischen Spannring (25, 75) umgeben sind.

9. Distanzhalter nach mindestens einem der vorhergehenden Ansprüche, dadurch gekennzeichnet, daß zwei oder mehr elastische Spannringe (25, 75) über- und/oder nebeneinander vorgesehen sind.

## Claims

1. Spacing device (11, 61) for media tubes (10, 60) to be guided in protecting tubes, comprising an annular body (12, 62) consisting of a plurality of annular segments (13, 14, 63, 64, 65) provided with radially projecting and axially aligned gliding skids (16, 17, 66, 67), the annular segments being provided at their ends facing each other with radially projecting flanges (17, 18, 67, 68) or flange elements to receive connecting means (25, 75),
**characterized in that**
the connecting means is provided by a one piece surrounding elastic clamping ring (25, 75).

2. Spacing device in accordance to claim 1, characterized in that the elastic clamping ring (25, 75) is an O-ring.

3. Spacing device in accordance to claim 1 or 2, characterized in that the adjacent flanges (17, 18, 67, 68) are surrounded by an elastic clamping ring (25, 75).

4. Spacing device in accordance to claim 3, characterized in that the elastic clamping ring (25, 75) is received in grooves (21, 22) provided at the forward sides of the flanges (17, 18).

5. Spacing device in accordance to claim 3 or 4, characterized in that the elastic clamping ring (25, 75) engages longitudinal undercuts (71, 72) of the flanges (67, 68).

6. Spacing device in accordance to claim 1 or 2, characterized in that an angular segment (13, 15, 63 - 65) is provided with two or more hook-like flange elements surrounded by clamping rings (25, 75).

7. Spacing device in accordance to claim 6, characterized in that the hook-like flange elements of adjacent ring segments (13, 14, 63 - 65) facing each other are pairwise surrounded by an elastic clamping ring (25, 75).

8. Spacing device in accordance to claim 6, characterized in that all hook-like flange elements of adjacent annular segments (13, 14, 63 - 65) are commonly surrounded by an elastic clamping ring.

9. Spacing device in accordance to at least one of the preceding claims, characterized in that two or more elastic clamping rings (25, 75) are provided above or adjacent each other.

## Revendications

1. Moyen d'écartement (11, 61) pour des tuyaux (10, 60) de milieux passant par des tuyaux de protection, avec un corps annulaire (12, 62) réalisé par des segments annulaires (13, 14, 63, 64, 65) fabriqués en matière plastique et comportant des patins (16, 17, 66, 67) saillant en direction radiale et orientés en direction axiale, les segments annulaires comportant à leurs extrémités qui sont orientées l'un vers l'autre des brides (17, 18, 67, 68) ou des éléments de bride rebiquant en direction radiale pour la réception des organes de connexion (25, 75), caractérisé en ce que l'organe de connexion est constitué par un anneau tendeur (25, 75) élastique et circulant de manière unitaire.

2. Moyen d'écartement selon la revendication 1, caractérisé en ce que l'anneau tendeur (25, 75) est un O-ring.

3. Moyen d'écartement selon une des revendications 1 ou 2, caractérisé en ce que les brides (17, 18, 67, 68) situées l'un à l'autre sont entourées par un anneau tendeur (25, 75) élastique.

4. Moyen d'écartement selon la revendication 3, caractérisé en ce que l'anneau tendeur (25, 75) est reçu dans des rainures frontales (21, 22) des brides (17, 18).

5. Moyen d'écartement selon une des revendications 3 ou 4, caractérisé en ce que l'anneau tendeur (25, 75) engrène dans des contre-depouilles longitudinales (71, 72) des brides (67, 68).

6. Moyen d'écartement selon une des revendications 1 ou 2, caractérisé en ce qu'auprès d'un segment annulaire (13, 15, 63 à 65) sont prévu deux ou plusieurs éléments de bride crochus entourés par des anneaux tendeur (25, 75).

7. Moyen d'écartement selon la revendication 6, caractérisé en ce que les éléments de bride crochus s'opposant l'un à l'autre des segments annulaires (13, 14, 63 à 65) voisins sont entourés par paires par un anneau tendeur élastique (25, 75).

8. Moyen d'écartement selon la revendication 6, caractérisé en ce que tous les éléments de bride crochus des segments annulaires (13, 14, 63 à 65) voisins sont entourés en commun par un anneau tendeur élastique (25, 75).

9. Moyen d'écartement selon une des revendications précédentes, caractérisé en ce que deux ou plusieurs anneaux tendeur (25, 75) sont prévus l'un sur l'autre et/ou l'un à coté de l'autre.
